# EUROPEAN PATENT SPECIFICATION

(11) **EP 3 767 563 B1**
(45) Date of publication and mention of the grant of the patent: **03.05.2023**
(21) Application number: 19788313.5
(22) Date of filing: 03.04.2019
(51) Int. Cl.: G06Q 10/06, G06Q 10/10, G06Q 50/08

(54) **WORK ORDER PLACEMENT/RECEIVING SYSTEM, SERVER, AND WORK ORDER PLACEMENT/RECEIVING METHOD**
ARBEITSAUFTRAGSPLATZIERUNGS-/-EMPFANGSSYSTEM, SERVER UND ARBEITSAUFTRAGSPLATZIERUNGS-/-EMPFANGSVERFAHREN
SYSTÈME DE PASSATION/RÉCEPTION DE COMMANDE DE TRAVAIL, SERVEUR ET PROCÉDÉ DE PASSATION/RÉCEPTION DE COMMANDE DE TRAVAIL

(30) Priority: 20.04.2018 JP 2018081296
(43) Date of publication of application: 20.01.2021
(73) Proprietor: KOBELCO CONSTRUCTION MACHINERY CO., LTD., Hiroshima-shi Hiroshima 731-5161 (JP)
(72) Inventor: SAIKI, Seiji, Hiroshima 731-5161 (JP)
(74) Representative: TBK
(86) International application number: PCT/JP2019/014843
(87) International publication number: WO 2019/202995

(56) References cited:
- CN-A- 101 183 262
- DE-A1-102016 000 353
- DE-A1-102016 004 382
- DE-T5-112016 002 851
- JP-A- 2013 175 088
- JP-A- 2015 102 996
- JP-A- 2017 027 455
- JP-A- 2017 037 605
- JP-A- 2017 037 685
- US-A1- 2005 002 354
- US-A1- 2016 348 504
- US-B1- 6 778 097

## Description

### Technical Field

The present invention relates to a technique of placing an order for work with an operator who remotely controls a construction machine.

### Background Art

In recent years, aging of operators of construction machines has caused serious shortage of operators, making it difficult for an orderer of work to hire an operator. This has increased expectations for a remote-control system that allows an operator to remotely control a construction machine without going to a work site.

The remote-control system makes it possible to recruit operators not just from all the domestic areas but also from foreign countries, enabling an orderer of work to easily hire an operator. In addition, the remote-control system makes it possible to carry out work using time difference, such as causing a domestic operator to perform the work during daytime and a foreign operator to perform the work during nighttime. This leads to a significant reduction in the work period.

However, there is no conventional technique for presenting, to an orderer of work, operators having a skill level appropriate for the work ordered by the orderer. Therefore, there has been a problem that the orderer cannot easily select an operator having a skill level appropriate for the work ordered.

Patent Literature 1 merely discloses a construction quantity managing system of computing the productivity of each of a plurality of working groups in civil engineering work based on machine information, staff information, working time, and construction result of the working group, which therefore cannot solve the above-mentioned problem.

### Citation List

### Patent Literature

Patent Literature 1: Japanese Unexamined Patent Publication No. 2002-108975 Prior art is disclosed in document DE 10 2016 004382 A1, describing a method and a device for planning and/or controlling and/or simulating the operation of a construction machine, as well as in document DE 10 2016 000353 A1, describing a crane, construction machine or industrial truck simulator.
Further prior art is disclosed in document CN 101 183 262 A, describing an engineering machinery remote control system and method, as well as in document US 2016/348504 A1, describing an arrangement for initiating a remote operation mode, as well as in document US 2005/002354 A1, describing systems and methods for providing network communications between work machines.
Still further prior art is disclosed in document US 6 778 097 B1, describing a remote radio operating system, and a remote operating apparatus, mobile relay station and radio mobile working machine, as well as in document DE 11 2016 002851 T5, describing a construction management system and a construction management method.

### Summary of Invention

It is an object of the present invention to provide a work order placement and receiving system capable of enabling an orderer of work to easily select an operator having a skill level appropriate for the work ordered by the orderer.

A work order placement and receiving system according to an aspect of the present invention is provided according to claim 1. Further, a work order placement and receiving method for use in a work order placement and receiving system is provided according to claim 5. Further advantageous developments are defined in the dependent claims 2 to 4.

The present invention enables an orderer of work to look through a list of operators displayed on an operator information list and thereby easily select an operator having a skill level appropriate for the work ordered.

### Brief Description of Drawings

FIG. 1 is a block diagram showing an overall configuration of a work order placement and receiving system according to an embodiment of the present invention.
FIG. 2 is a diagram showing an example of a work entry screen displayed on an ordering terminal when an orderer of work places an order for the work.
FIG. 3 is a diagram showing an example of a work details input screen for civil engineering work.
FIG. 4 is a diagram showing an example of a work details input screen for demolition work.
FIG. 5 is a diagram showing an example of a grade determination table.
FIG. 6 is a diagram showing a work entry final screen.
FIG. 7 is a diagram showing a configuration of an operator database.
FIG. 8 is a diagram showing an example of an operator list screen.
FIG. 9 is a diagram showing a detailed screen for an operator.
FIG. 10 includes tables for lists of machine model ranges, ATT types, and head ATT types.
FIG. 11 is a diagram showing an example of an offer list screen.
FIG. 12 is a diagram showing a configuration of a work performance database.
FIG. 13 is a diagram showing a configuration of a simulator performance database.
FIG. 14 is a diagram showing a configuration of a test performance database.
FIG. 15 is a diagram schematically showing processing performed by a database management unit.
FIG. 16 is a flowchart showing processing performed in the work order placement and receiving system according to the embodiment of the present invention.

### Description of Embodiments

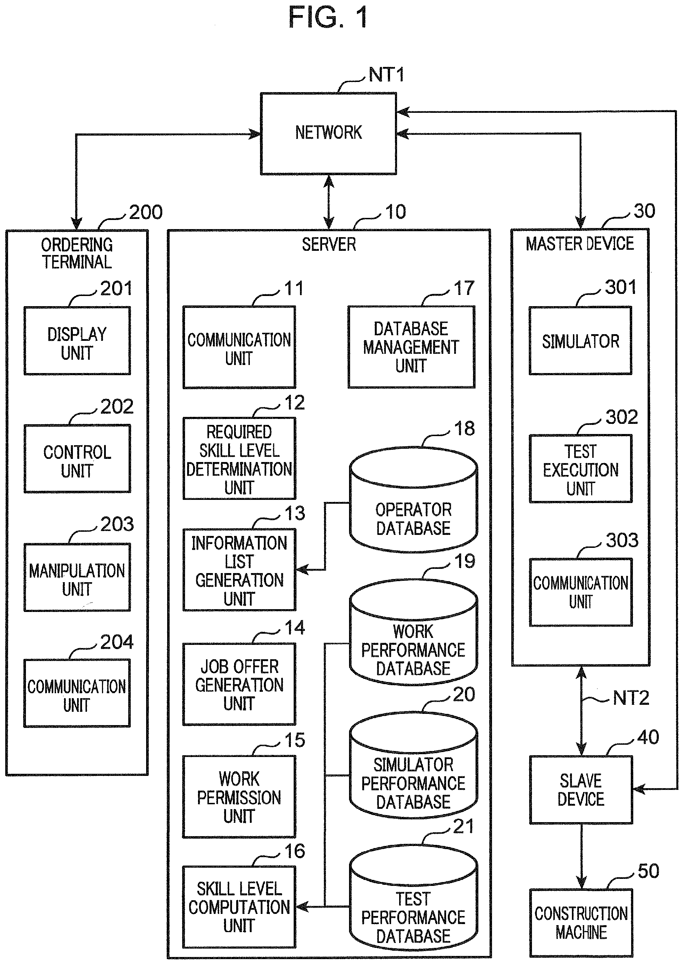

FIG. 1 is a block diagram showing an overall configuration of a work order placement and receiving system according to an embodiment of the present invention. The work order placement and receiving system includes a server 10, an ordering terminal 200, and a master device 30. The ordering terminal 200 is a device used by an orderer of work to place an order for the work with an operator of the master device 30. The server 10 is a device for presenting, to the orderer, operators who match the requirements of the work ordered by the orderer.

The master device 30 serves as an example of a remote controller configured to remotely control a construction machine 50. In the present embodiment, the master device 30 is a controller configured to virtualize an operator's seat of the construction machine 50. In the master device 30, a control lever is disposed at the same position as a control lever of the construction machine 50. In addition, the master device 30 includes a seat where the operator sits, and a display device disposed in front of the seat and configured to display pictures of the surroundings of the construction machine 50. The operator manipulates the control lever while watching the surrounding pictures displayed on the display device, thereby remotely controlling the construction machine 50.

A slave device 40 is a sub-controller disposed at the operator's seat of the construction machine 50 and configured to directly control the control lever disposed at the operator's seat of the construction machine 50 based on the amount of manipulation that the master device 30 have received. The slave device 40 is a machine for controlling the construction machine 50 as, so to speak, a dummy operator. The construction machine 50 is a construction machine to be remotely controlled, such as a hydraulic excavator or a hydraulic crane,

The server 10, the ordering terminal 200, the master device 30, and the slave device 40 are communicably interconnected to one another via a network NT1. The network NT1 can be in the form of a long distance communication network including, for example, the Internet and mobile communication networks.

The master device 30 and the slave device 40 are communicably interconnected via a communication channel NT2. The communication channel NT2 is in the form of a communication channel for wireless communication between the master device 30 and the slave device 40 at a distance of tens to hundreds of meters, such as a specified low-power radio system or Bluetooth (registered trademark). However, this is merely an example, and the master device 30 and the slave device 40 may be interconnected via the network NT1. In this case, the master device 30 and the slave device 40 can communicate with each other over a long distance. Alternatively, the communication channel NT2 may be wired.

The ordering terminal 200 is a computer, such as a personal computer, owned by the orderer, who places an order for work with an operator. Here, the orderer is a person who plans work such as construction work and places an order for the work with an operator. The orderer may be, for example, an employee of the company that places the order for the work. Alternatively, the orderer may be an employee of a contractor of the work or a self-employed person who is not under direct employment of the contractor of the work.

The ordering terminal 200 includes a display unit 201, a control unit 202, a manipulation unit 203, and a communication unit 204. The display unit 201 is, for example, a liquid crystal display. The control unit 202 is, for example, a processor such as a CPU, and performs overall control of the ordering terminal 200. The manipulation unit 203 includes a keyboard and a mouse, for example, and receives work request information entered by the orderer. The communication unit 204 is a communication device configured to connect the ordering terminal 200 to the network NT1, and transmits the work request information received by the manipulation unit 203 to the server 10 via the network NT1.

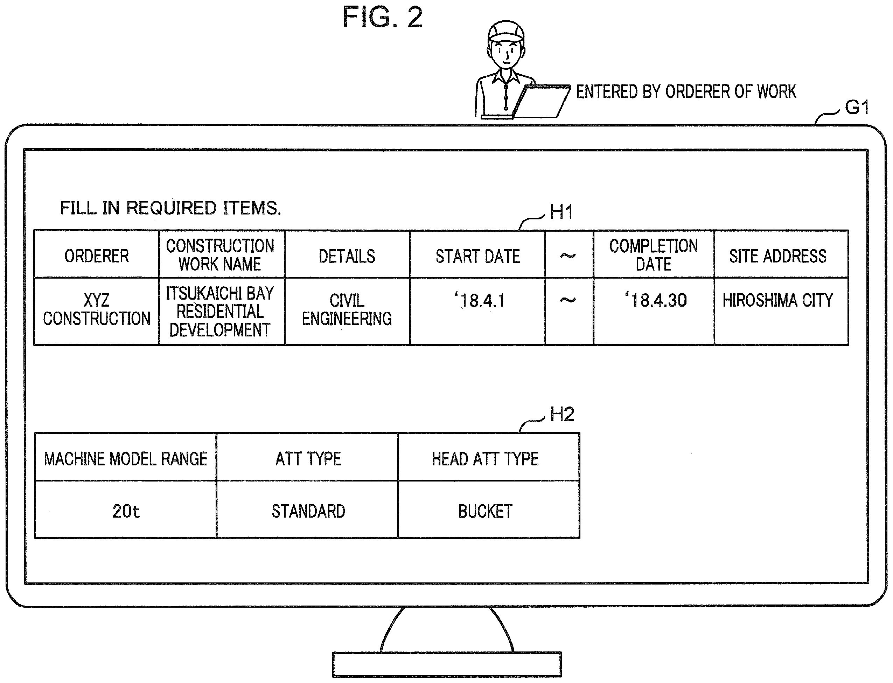

FIG. 2 is a diagram showing an example of a work entry screen G1 displayed on the ordering terminal 200 when the orderer places an order for work. The work entry screen G1 includes two tables H1 and H2. The table H1 is used to enter general information about the work being ordered. The table 2 is used to enter specifications of the construction machine 50 to be used in the work being ordered.

The table H1 includes columns for "orderer", "construction work name", "details", "start date", "completion date", and "site address". In the column headed "orderer", the name of the orderer is entered. In the column headed "construction work name", the name of the work is entered. In the column headed "details", the general category of the work is entered, for example. Examples of the general category of the work are civil engineering work and demolition work. In the case of ordering civil engineering work, "civil engineering" is entered in the column headed "details" and in the case of ordering demolition work, "demolition" is entered in the column headed "details". In the column headed "start date", the start date of the work is entered. In the column headed "completion date", the completion date of the work is entered. In the column headed "site address", the address of a work site is entered.

The example of FIG. 2 shows data entered by the orderer under the name of "XYZ construction", for civil engineering work named "Itsukaichi Bay Residential Development" to be performed in Hiroshima City from April 1, 2018 to April 30, 2018.

The table H2 includes columns for "machine model range", "ATT type", and "head ATT type". In the column headed "machine model range", the weight of the construction machine 50 to be used in the work is entered. In the column headed "ATT type", the type of an attachment included in the construction machine 50 to be used in the work is entered. The "ATT type" shows the type of the attachment included in the construction machine 50, such as standard, long range, separate, three-fold, or short arm. For example, the attachment categorized as "standard" ATT type includes a boom and an arm. In the column headed "head ATT type", the type of a head attachment is entered. The "head ATT type" shows the type of the head attachment attached to a distal end of the attachment, such as bucket, rotating grapple, mechanical grapple, small nibbler, or large nibbler. It should be understood that the "machine model range", "ATT type", and "head ATT type" merely serve as examples of a plurality of parameters of specifications of the construction machine 50.

The example of FIG. 2 shows the construction machine 50 that has been entered as having the machine model range "20t", the ATT type "standard", and the head ATT type "bucket".

Upon completion of data entry on the work details input screen G1, the ordering terminal 200 displays work details input screens G2, G3 for allowing the orderer to enter work details of the work being ordered. The work details refer to specific work contents included in the work, such as excavation, loading, and leveling of ground.

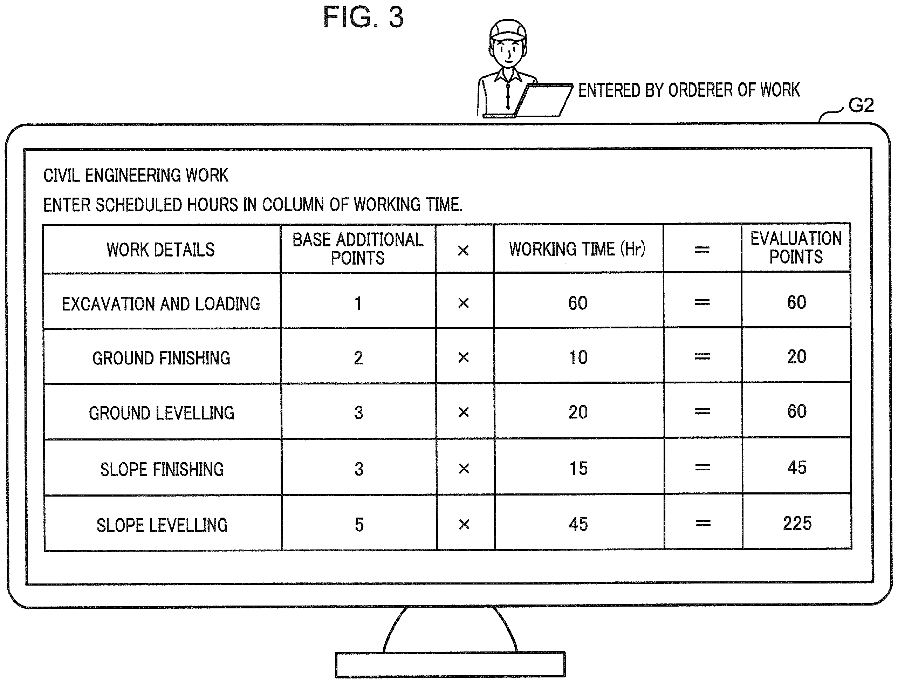

FIG. 3 is a diagram showing an example of the work details input screen G2 for civil engineering work. The work details input screen G2 displays a table including columns for "work details", "base additional points", "working time", and "evaluation points". It should be understood that the work details input screen G2 is displayed when "civil engineering" is entered in the column headed "details" in the work entry screen G1.

The column headed "work details" displays work contents included in the work. Here, five work contents are registered, which are "excavation and loading", "ground finishing", "ground levelling", "slope finishing", and "slope levelling".

The "excavation and loading" refers to excavating soil, ground and rocks and loading them onto a dump truck. The "ground finishing" refers to finishing levelling the ground that has been levelled through the "ground levelling". The "ground levelling" refers to eliminating irregularities of ground to level the ground. The "slope finishing" refers to finishing levelling the slope that has been levelled through the "slope levelling". The "slope levelling" refers to levelling a slope artificially created by removing or depositing soil. It should be understood that the work contents shown in FIG. 3 merely serve as examples, and other work contents may be included.

The "base additional points" indicates a predetermined coefficient by which the corresponding working time entered in the column headed "working time" is multiplied. Here, the value of the base additional points is set to increase as the difficulty of the work content increases. The "working time" indicates the working time required for each work content by the orderer and entered by the orderer. The "evaluation points" indicates the value obtained for each work content by multiplying the working time by the relevant base additional points. The higher the evaluation points, the more difficult the work content is and therefore the higher the skill level required for the operator.

The orderer enters the working time for each of the work contents in the column headed "working time" by manipulating the manipulation unit 203. In FIG. 3, the ordering terminal 200 displays in advance each work content and its base additional points. Upon entry of working time by the orderer, the ordering terminal 200 computes the evaluation points by multiplying the entered working time by the relevant base additional points, and displays the evaluation points in the column headed "evaluation points".

The example of FIG. 3 shows that 60 hours is entered as the working time for the "excavation and loading". Thus, "60" is displayed as the "evaluation points".

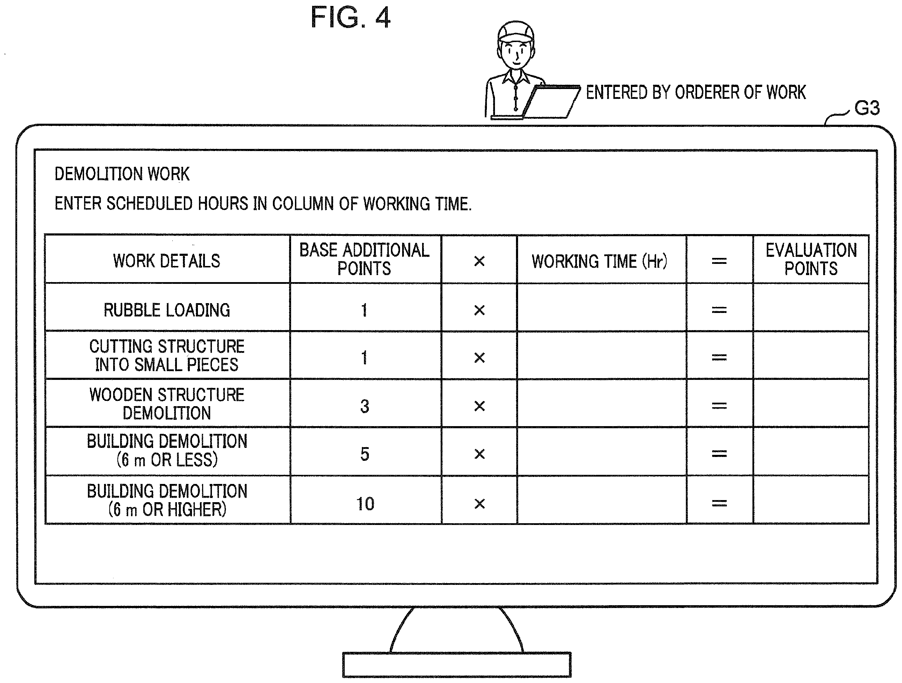

FIG. 4 is a diagram showing an example of the work details input screen G3 for demolition work. The work details input screen G3 is displayed when "demolition" is entered in the column headed "details" in the work entry screen G1.

Since the work details input screen G3 is displayed for demolition work, the column headed "work details" displays work contents relating to demolition work. Here, the column headed "work details" displays work contents such as "rubble loading", "cutting structure into small pieces", "wooden structure demolition", "building demolition (6 m or less)", and "building demolition (6 m or higher). Also in the case of demolition work, the base additional points is set to increase as the difficulty of the work content increases, as in the case of civil engineering work. The other columns of the work details input screen G3 are the same as those of the work details input screen G2.

After entering data on the screens shown in FIGS. 2 to 4, the orderer pushes an unillustrated send button. This causes the ordering terminal 200 to receive the entered work request information and transmit it to the server 10. The work request information includes the information entered into the fields of the tables H1, H2 of FIG. 2, and the information entered for each work content in FIG. 3 or 4 that includes the working time and the evaluation points associated with each other. Here, the evaluation points has been described as being computed by the ordering device 200, but may alternatively be computed by the server 10. In this case, the server 10 computes the evaluation points by multiplying the working time transmitted from the ordering terminal 200 by the relevant base additional points, and transmits the computed evaluation points to the ordering terminal to allow the ordering terminal 200 to display it in the column headed "evaluation points".

Let us refer back to FIG. 1. The server 10 is a computer including a processor such as a CPU, a memory, and a communication function. The server 10 includes a communication unit 11, a required skill level determination unit 12, an information list generation unit 13, a job offer generation unit 14, a work permission unit 15, a skill level computation unit 16, a database management unit 17, an operator database 18, a work performance database 19, a simulator performance database 20, and a test performance database 21. Each of the databases shown in FIG. 1 is stored in the memory included in the server 10. In FIG. 1, the units from the required skill level determination unit 12 to the database management unit 17 are each realized, for example, by a program executed on the CPU.

The communication unit 11 is, for example, a communication device configured to connect the server 10 to the network NT1, and receives the work request information transmitted from the ordering terminal.

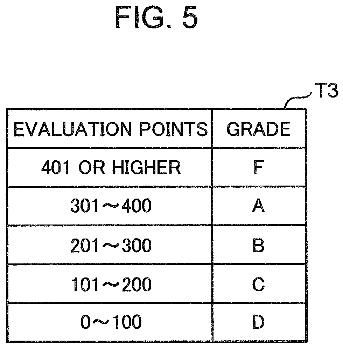

The required skill level determination unit 12 determines a required skill level indicating the remote control skill required for the operator by the orderer based on the work request information received by the communication unit 11. The required skill level determination unit 12 computes the sum of all the evaluation points for each of the work contents included in the work request information and compares the computed sum with a grade determination table T3 shown in FIG. 5, thereby determining the required skill level.

FIG. 5 is a diagram showing an example of the grade determination table T3. The grade determination table T3 is prepared in the memory of the server 10 in advance, and includes columns for "evaluation points" and "grade". In the example of FIG. 5, the skill level is graded into five levels in order of descending skill level, F, A, B, C, and D. Thus, in the column headed "grade" in the grade determination table T3, Grades F to D are registered in this order. In the column headed "evaluation points", the range of evaluation points for each of Grades F to D is registered. For example, in the example of FIG 3, the sum of the evaluation points is 410, and thus the required skill level is Grade F. Upon determination of the required skill level, the determination result is transmitted to the ordering terminal 200.

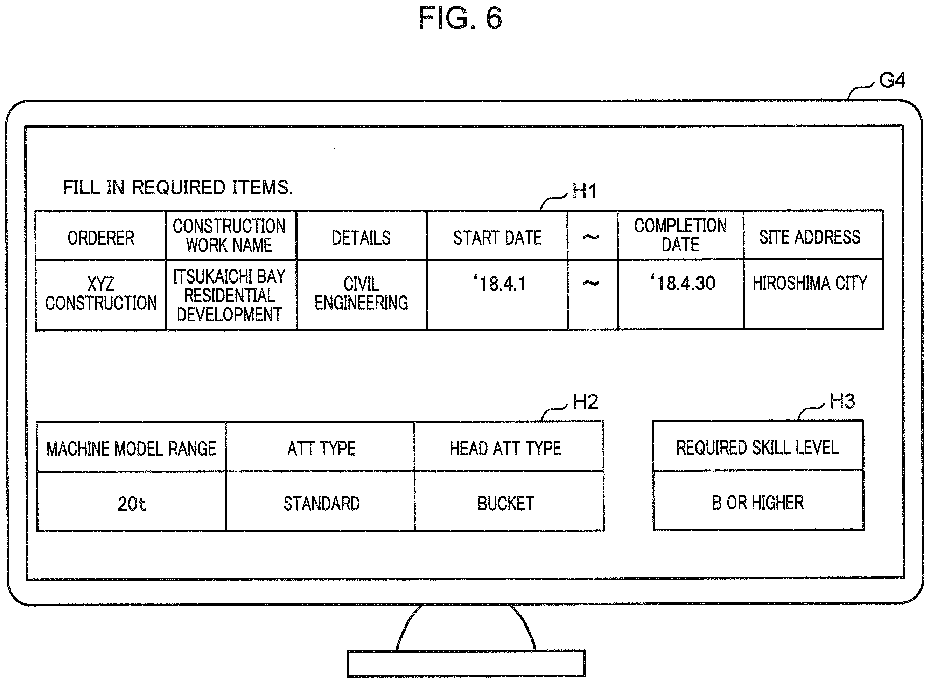

FIG. 6 is a diagram showing a work entry final screen G4. The work entry final screen G4 is displayed by the ordering terminal 200 having received the determination result of the required skill level, for informing the orderer of receipt of the order for work.

The work entry final screen G4 includes, in addition to the tables H1, H2 described with reference to FIG. 2, a display field H3 for the required skill level. The display field H3 displays the required skill level determined by the server 10. Here, the display field H3 displays "B or higher" because the sum of the evaluation points included in the work request information fell within the range of 201 or higher.

Such display of the determination result of the required skill level enables the orderer to recognize the objective evaluation of the difficulty of the work he/she has ordered.

Let us refer back to FIG. 1. The information list generation unit 13 extracts operators having skill levels equal to or higher than the required skill level by referring to the operator database 18, and generates an operator information list for presenting the extracted operators to the orderer.

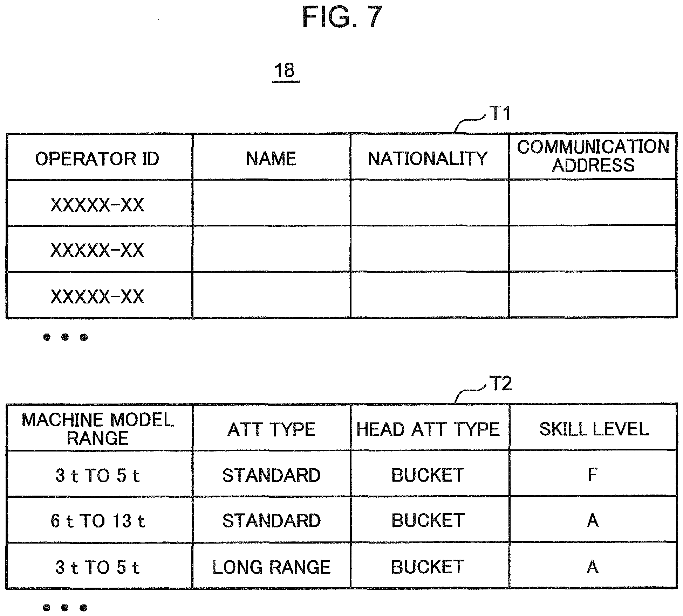

FIG. 7 is a diagram showing a configuration of the operator database 18. The operator database 18 includes an operator table T1 and a skill level table T2. The operator table T1 is a table in which respective personal information of enrolled operators is registered in advance. The skill level table T2 is a table created for each of the enrolled operators.

Specifically, the operator table T1 includes columns for "operator ID", "name", "nationality", and "communication address". The "operator ID" indicates an identifier for uniquely identifying each of the enrolled operators. The "name" indicates the name of each operator. The "nationality" indicates the nationality where each operator lives in, such as Japan or Germany. The "communication address" indicates the communication address of the master device 30 to be used by each operator.

The skill level table T2 includes columns for "machine model range", "ATT type", "head ATT type", and "skill level", in which the "skill level" of the operator for each of various combinations of "machine model range", "ATT type", and "head ATT type" is registered. Specifically, in the skill level table T2, the skill level for each combination of a plurality of parameters of specifications of the construction machine 50 is registered. The "machine model range" indicates a range of the weight of the construction machine 50 classified in advance, such as 3 t to 5 t and 6 t to 13 t. The "ATT type" and the "head ATT type" indicate types of the attachment and the head attachment specified in advance.

The operator shown in the skill level table T2 of FIG. 7 has a skill level of Grade "F" for the combination in which the machine model range is "3 t to 5 t", the ATT type is "standard", and the head ATT type is "bucket". Thus, F is registered in the first record in the column headed "skill level".

The skill levels shown in FIG. 7 have been computed by the skill level computation unit 16 described in detail later based on, for example, the past work performance records of the operator and registered in the skill level table T2 in advance.

The information list generation unit 13 extracts, from the skill level table T2, a record including the same combination as the combination of "machine model range", "ATT type", and "head ATT type" included in the work request information received by the communication unit 11 and determines, if the operator's skill level registered in the extracted record is equal to or higher than the required skill level, that the operator satisfies the required skill level.

The information list generation unit 13 performs the above-mentioned processing for all the enrolled operators, thereby extracting operators having skill levels equal to or higher than the required skill level. Subsequently, the information list generation unit 13 generates an operator information list including the extracted operators and passes it to the communication unit 11. The communication unit 11 then transmits the operator information list to the ordering terminal 200. The ordering terminal 200 generates an operator list screen based on the transmitted operator list information and displays it on the display unit 201.

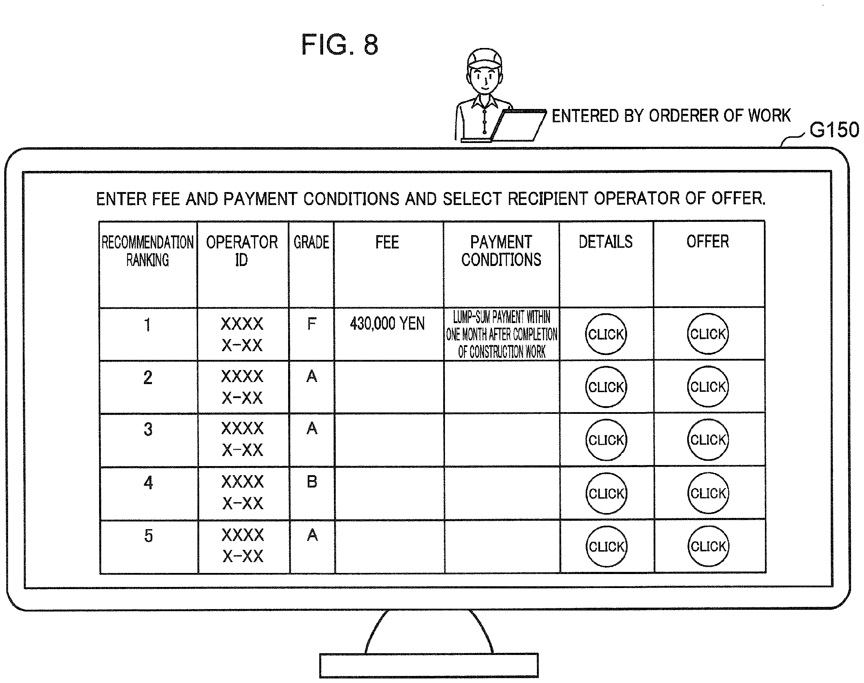

FIG. 8 is a diagram showing an example of an operator list screen G150. The operator list screen G150 lists the operators extracted in the server 10 in order of descending skill level. The operator list screen G150 includes columns for "recommendation ranking", "operator ID", "grade", "fee", "payment conditions", "details", and "offer".

The "recommendation ranking" indicates the rank of each of the extracted operators arranged in order of descending skill level. The "operator ID" indicates the identifier of each operator. The "grade" indicates the skill level of each operator. The "fee" indicates a fee to be paid to each operator by the orderer. The "payment conditions" indicate conditions of payment of the fee, such as lump-sum payment within one month after the completion of construction work. Each field in the column headed "details" displays a button for displaying a detailed screen of the relevant operator. Clicking the button displays the detailed screen of the operator. Each field in the column headed "offer" displays a work order button. In order to make a job offer to one of the operators displayed on the operator list screen G150, the orderer enters a fee and payment conditions in the columns headed "fee" and the "payment conditions" and clicks the work order button displayed in the column headed "offer" at the row of the one operator. This causes the ordering terminal 200 to receive from the orderer an instruction for selecting the recipient operator of the job offer from among the operators included in the operator list screen G150 and transmit the selection instruction to the server 10. The operator list screen G150, which lists the operators having skill levels equal to or higher the required skill level together with their respective skill levels, enables the orderer to select an operator easily.

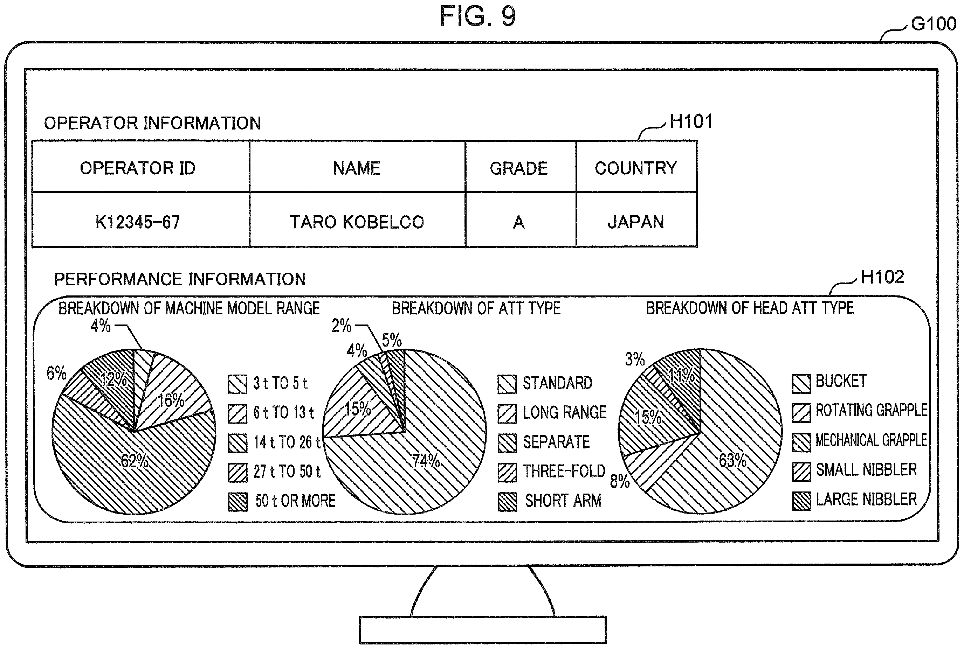

FIG. 9 is a diagram showing a detailed screen G100 for an operator. The detailed screen G100 is displayed when one of the buttons displayed in the column headed "details" on the operator list screen G150 is clicked. The detailed screen G101 includes a display section H101 for personal information of an operator, and a display section H2 for performance information indicating work performance records of the operator. The display section H100 displays the operator ID, the name, the grade indicating the skill level, and the country of residence of a selected operator. The display section H102 displays, for each of "machine model range", "ATT type", and "head ATT type", a circle graph showing the breakdown of the work performance records. Such display of the performance information enables the orderer to know easily about the work contents that the operator is good at.

Let us refer back to FIG. 1. The job offer generation unit 14 generates, based on the selection instruction received by the communication unit 11, a job offer notice for notifying the operator of being offered a job by the orderer and the details of work. The job offer notice is transmitted by the communication unit 11 to the master device 30 of the operator who is offered the job. Specifically, the job offer notice includes the information entered on the work entry screen G1 (FIG. 2) and the information entered on the operator list screen G150 (FGI. 8), such as the fee and the payment conditions, by the orderer.

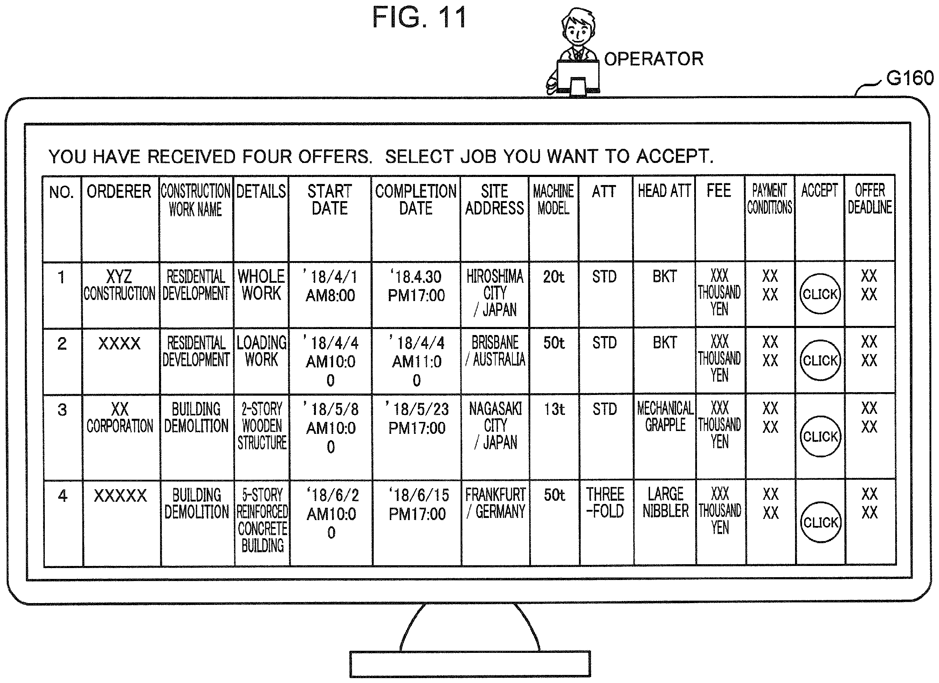

The master device 30, upon receipt of the job offer notice, generates an offer list screen G160 shown in FIG. 11 based on the job offer notice, and displays it on an unillustrated display unit. FIG. 11 is a diagram showing an example of the offer list screen G160.

The offer list screen G160 is a screen displaying a list of job offers made for an operator, and includes columns for "No.", "orderer", "construction work name", "details", "start date", "completion date", "site address", "machine model", "ATT", "head ATT", "fee", "payment conditions", "accept", and "offer deadline".

The "No." indicates a number for identifying a job offer. In the example of FIG. 11, four job offers are displayed because the four job offers have been received.

The columns from "orderer" to "site address" display the information entered in the table H1 on the work entry screen G1 shown in FIG. 2. The columns headed "machine model", "ATT", and "head ATT" display the information entered in the columns headed "machine model range", "ATT type", and "head ATT type" of the table H2 on the work entry screen G1 shown in FIG. 2. The columns headed "fee" and "payment conditions" display the information entered in the columns headed "fee" and "payment conditions" on the operator list screen G150 (FIG. 8). Each field in the column headed "accept" displays an acceptance button. Each field in the column headed "offer dead line" indicates a deadline for the operator to accept the job offer.

The operator clicks the acceptance button displayed in the column headed "accept" at the row of the job offer which he/she wants to accept, among the job offers displayed on the offer list screen G160. This causes the master device 30 to receive from the operator an acceptance instruction for accepting the job offer and transmit the acceptance instruction to the server 10. The offer list screen G160 displays, in addition to the information relating to the work corresponding to each job offer, the information such as the fee and the payment conditions. This enables the operator to easily determine whether or not to accept each job offer.

Let us refer back to FIG. 1. The work permission unit 15, upon receipt of acceptance instruction by the communication unit 11, issues an access code for permitting the operator to perform the work corresponding to the job offer that the operator has accepted. The access code is transmitted to the master device 30 and the slave device 40 by the communication unit 11.

The master device 30 and the slave device 40, upon receipt of the access code, stores the access code in a respective unillustrated memory. The operator is required to enter an access code in order to perform the work which he/she has accepted by remotely controlling the master device 30. The master device 30 compares the access code entered by the operator with the access code stored in the memory and, if they agree, transmits the access code to the slave device 40. The slave device 40 compares the received access code with the access code stored in the memory and, if they agree, transmits an access permission notice to the master device 30. This enables the operator to remotely control the construction machine 50 using the master device 30.

Here, the access code may be in the form of the feature of a face image of the operator. In this case, the master device 30 captures a face image of the operator using an unillustrated camera, extracts the feature of the face image and, if the feature of the face image agrees with the feature stored in the memory, transmits the feature to the slave device 40. The slave device 40, if the received feature agrees with the feature stored in the memory, transmits the access permission notice to the master device 30. In the case where the access code is in the form of a character string, a third party who has stolen the character string can perform remote control using the master device 30 by entering the character string. On the other hand, using the feature of a face as the access code will prevent such remote control performed by an unauthorized third party.

In addition, the access code may have an expiration date. The completion date of work can be used as the expiration date. This makes it possible to prevent the operator from continuing to remotely control the construction machine 50 having used in work despite completion of the work.

The skill level computation unit 16 computes, for each of the enrolled operators, the sum of all the evaluation points for each of work contents by referring to the work performance database 19, the simulator performance database 20, and the test performance database 21, and compares the computed sum of the evaluation points with the grade determination table T3, thereby computing the skill level. The skill level computation unit 16 then registers the skill level in the operator database 18.

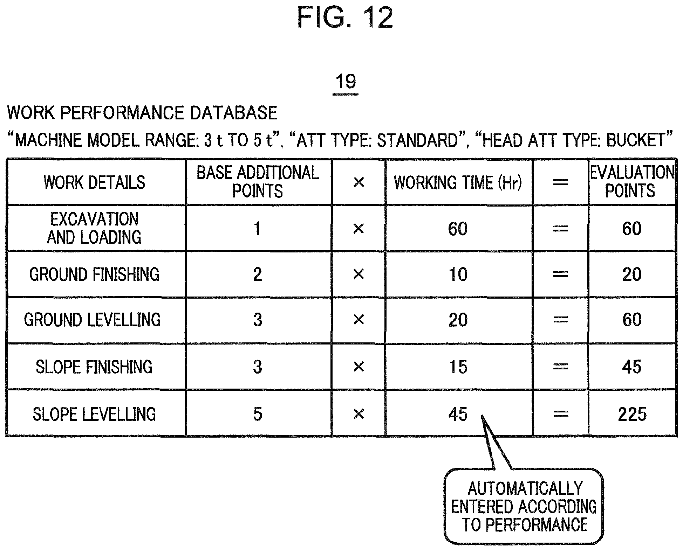

Hereinafter, the computation of the skill level will be described in detail. FIG. 12 is a diagram showing a configuration of the work performance database 19. The work performance database 19 is created for each of the enrolled operators for each of various combinations of "machine model range", "ATT type", and "head ATT type", and has past work performance records registered therein. The example of FIG. 12 shows the work performance database 19 created for the combination in which the "machine model range" is "3 t to 5 t", the "ATT type" is "standard", and the "head ATT type" is "bucket". If the relevant operator has work performance records for a combination other than the combination in which the "machine model range" is "3 t to 5 t", the "ATT type" is "standard", and the "head ATT type" is "bucket", there is also the work performance database 19 created for that combination. Here, the "work performance records" refers to performance records for the work ordered by the orderer, i.e. performance records of remotely controlling the construction machine 50 in actual work sites.

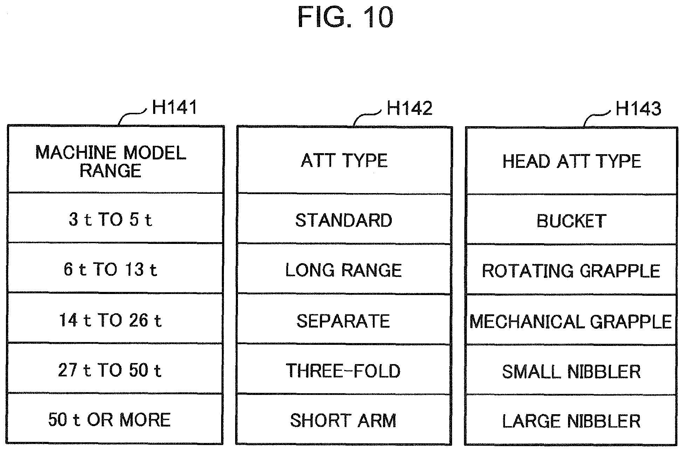

FIG. 10 includes tables for lists of machine model ranges, ATT types, and head ATT types. As the table H141 shows, in the present embodiment, the machine model range is divided into five categories, such as "3 t to 5 t", "6 t to 13 t", to "50 t or more". As the table H142 shows, in the present embodiment, the ATT type is divided into five categories, such as "standard", "long range", "separate", "three-fold", and "short arm". As the table H143 shows, in the present embodiment, the head ATT type is divided into five categories, such as "bucket", "rotating grapple", "mechanical grapple", "small nibbler", and "large nibbler".

For example, regarding the combinations of the machine model range, the ATT type, and the head ATT type, if an operator has work performance records for a combination of "3 t to 5 t", "standard", and "bucket" and for a combination of "3 t to 5 t", "long range", and "bucket", there are two work performance databases 19 corresponding to these two combinations.

Let us refer back to FIG. 12. The work performance database 19 includes columns for "work details", "base additional points", "working time", and "evaluation points". In the column headed "working time", there is registered the cumulative working time for each of work contents included in work for which the operator has performance records. The "base additional points" and "evaluation points" indicate the same things as described with reference to FIG. 3.

The skill level computation unit 16 computes, for each work content in the work performance database 19, the evaluation points by multiplying the working time by the relevant base additional points and registers the computed evaluation points in the column headed "evaluation points". In FIG. 12, five work contents relating to civil engineering work, from "excavation and loading" to "slope levelling", are registered. This is because the relevant operator has work performance records for these work contents. If the operator has work performance records for demolition work, for example, work contents relating to the demolition work will also be registered. In this manner, in the work performance database 19, the work contents for which the operator has work performance records are each registered in association with a cumulative value of the actual working time taken for the work content.

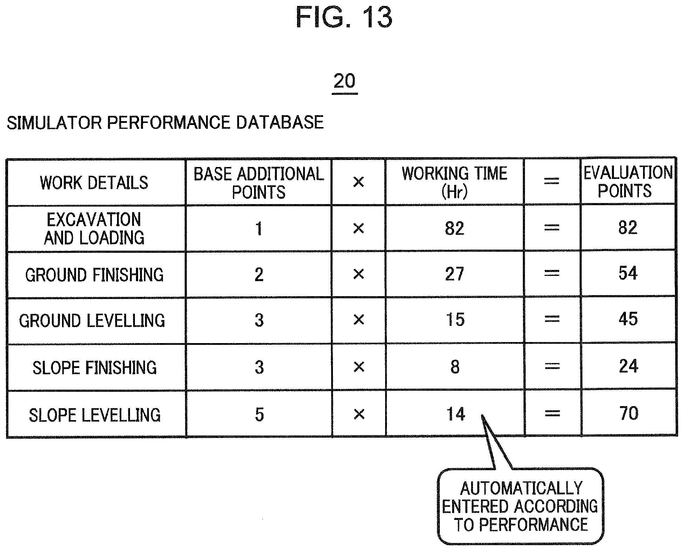

FIG. 13 is a diagram showing a configuration of the simulator performance database 20. The simulator performance database 20 is created for each of the enrolled operators, and has performance records registered therein that have been achieved by the operator in the training of remote control using a simulator 301 included in the master device 30. The simulator performance database 20 includes columns for "work details", "base additional points", "working time", and "evaluation points". In the column headed "work details", work contents for which the operator has received training using the simulator 301 are registered. In the column headed "working time", a cumulative value of training time is registered for each of the work contents for which received by the operator has received training using the simulator 301. The "base additional points" and "evaluation points" indicate the same things as described with reference to FIG. 3.

The skill level computation unit 16 computes, for each work content in the simulator performance database 20, the evaluation points by multiplying the working time by the relevant base additional points and registers the computed evaluation points in the column headed "evaluation points". In FIG. 13, five work contents relating to civil engineering work, from "excavation and loading" to "slope levelling", are registered. This is because the relevant operator has training performance records for these work contents. In this manner, in the simulator performance database 20, the work contents for which the operator has training performance records are each registered in association with a cumulative value of the actual training time taken for the work content and the evaluation points for the work content.

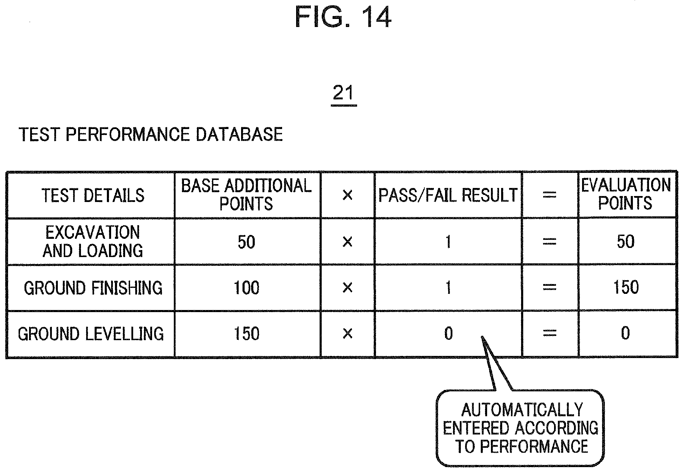

FIG. 14 is a diagram showing a configuration of the test performance database 21. The test performance database 21 is created for each of the enrolled operators, and has a pass or fail result of a specific test conducted for each work content registered therein. The test guarantees that an operator has a certain skill level for a specific work content.

The test performance database 21 includes columns for "test details", "base additional points", "pass/fail result", and "evaluation points". In the column headed "test details", work contents for which tests are conducted are registered. Here, tests are conducted for three work contents, "excavation and loading", "ground finishing", and "ground levelling". Thus, these three work contents are registered in the column headed "test details". In the column headed "pass/fail result", the results of pass or fail in the tests are registered, in which "1" denotes pass and "0" denotes fail. The "base additional points" and "evaluation points" indicate the same things as described with reference to FIG. 3. However, in order to place the evaluation points on the same scales as those of the work performance database 19 shown in FIG. 12 and those of the simulator performance database 20 shown in FIG. 13, the base additional points are set to values fifty times greater than those in FIGS. 12 and 13.

The skill level computation unit 16 computes the sum of all the evaluation points for each work content in the work performance database 19, all the evaluation points for each work content in the simulator performance database 20, and all the evaluation points for each work content in the test performance database 21. For example, the sum of the evaluation points in the work performance database 19 is 410 (= 60 + 20 + 60 + 45 + 225), the sum of all the evaluation points in the simulator performance database 20 is 275 (= 82 + 54 + 45 + 24 + 70), and the sum of all the evaluation points in the test performance database 21 is 200 (= 50 + 150). Thus, the final sum of all the evaluation points for the combination of "machine model range: 3 t to 5 t", "ATT type: standard", and "head ATT type: bucket" is computed as 885 (= 410 + 275 + 200). Subsequently, the skill level computation unit 16 finds that the final sum "858" falls in the range of Grade F by referring to the grade determination table T3, thus determining that the skill level of the relevant operator for the combination of "machine model range: 3 t to 5 t", "ATT type: standard", and "head ATT type: bucket" is Grade F. Further, if the relevant operator has work performance records for another combination of "machine model range", "ATT type", and "head ATT type", the skill level computation unit 16 also computes the skill level for that combination by computing the sum of all the evaluation points for that combination.

The skill level computation unit 16 may be configured to perform the processing of computing the skill level each time one of the work performance database 19, the simulator performance database 20, and the test performance database 21 is updated, and update the relevant skill level registered in the operator database 18.

Let us refer back to FIG. 1. The database management unit 17 manages the work performance database 19, the simulator performance database 20, and the test performance database 21.

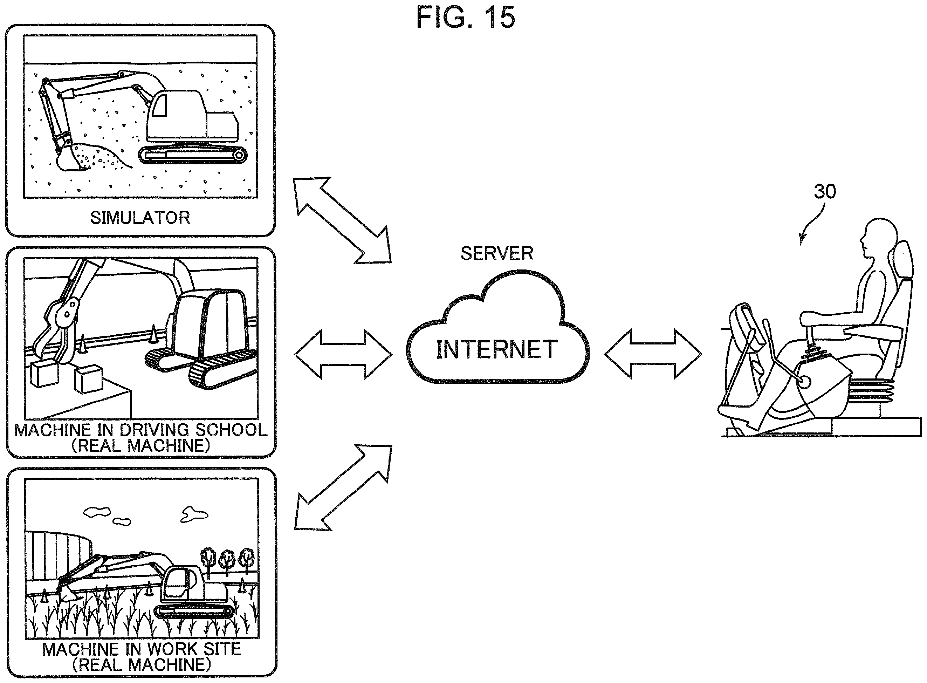

FIG. 15 is a diagram schematically showing processing performed by the database management unit 17. The database management unit 17 updates the simulator performance database 20 upon each receipt of a performance record of training using the simulator 301 (FIG. 1). The simulator 301 is a computer program stored in the master device 30, and is executed by the operator in his/her spare time between actual work in order to improve his/her skill level of remote control.

The simulator 301 creates, in a computer space, a virtual site environment in the form of a three-dimensional model that simulates a real work environment, and disposes a construction machine model that simulates a real construction machine in the virtual site environment. Subsequently, the simulator 301 generates an image of the virtual site environment as seen by the operator sitting on a driver's seat of the construction machine model, and displays it on the display unit of the master device 30. Here, upon manipulation of the control lever of the master device 30 by the operator, the simulator 301 changes the positions of the attachment, the head attachment, and the upper slewing body of the construction machine model according to the manipulation, and also changes the image of the virtual site environment according to the change. In addition, the simulator 301 realizes in the virtual site environment a work content, such as excavation and loading, according to the manipulation of the control lever by the operator as in the real work environment.

The simulator 301, when activated, allows the operator to select a work content and perform the work content in the virtual site environment, thereby training the operator. Upon completion of the training, the simulator 301 transmits a simulation result indicating the work content in association with the training time to the server 10.

The database management unit 17, upon receipt of the simulation result, updates the relevant simulator performance database 20 according to the simulation result. In this manner, the history of simulations performed by the operator is accumulated in the simulator performance database 20.

In addition, the database management unit 17, when an operator has obtained a pass or fail result of a test conducted for a work content, updates the relevant test performance database 21 according to the test result. The test is, for example, provided by a provider of the present work order placement and receiving system. An operator can take the test by activating a test execution unit 302 of the master device 30. The test is realized, for example, by allowing the operator to control a real construction machine 50 placed in a real driving school, using the master device 30.

For example, the operator activates the test execution unit 302 by operating the master device 30 and enters a test request for conduct of a desired test relating to a work content, upon which the test request is transmitted to the server 10. Upon receipt of the test request, the server 10 communicably connects the slave device 40 mounted on a specified construction machine 50 in the driving school to the master device 30 to thereby put the specified construction machine 50 into a state remotely controllable by the master device 30, and then allows the test to start. The pass or fail of the test is determined by, for example, an examiner remotely or directly viewing the work content actually performed in the driving school by remote control. When the pass or fail is determined by the examiner, the test result is transmitted form a terminal of the examiner to the server 10. Upon receipt of the test result, the database management unit 17 updates the test performance database 21 of the relevant operator.

In the above-described manner, an operator can take some training in virtual site environments provided by the simulator 301 to improve his/her skill level before taking a test.

Further, the database management unit 17, upon receipt of a work performance record for actual work, updates the relevant work performance database 19 with the work performance record. The work performance record includes information on the amount of manipulation of the control lever of the master device 30 performed by the operator. Here, the work content performed by the construction machine 50 has a generally fixed pattern in the change of positions of the attachment, the head attachment, and the upper slewing body, depending on its type. Therefore, the type of a work content can be identified based on the information on the amount of manipulation of the control lever performed by the operator. Accordingly, the database management unit 17 may be configured to identify the type of a work content and working time based on the information on the manipulation amount included in a work performance record and register them in the work performance database 19 of the relevant operator.

In the above-described manner, the present embodiment provides a system that enables an operator to improve his/her skill level as he/she performs more training using the simulator 301 as well as more actual work and as he/she passes more tests, and thereby enables the operator to receive more job offers. This therefore makes it possible to motivate an operator to improve the skill level by taking simulator training or a test, making use of spare time between actual work, and thereby improve the general skill level of operators.

Let us refer back to FIG. 1. The master device 30 includes the simulator 301 (an example of a remote-control simulator), the test execution unit 302, and a communication unit 303. The simulator 301 executes the above-described simulation for training an operator. The test execution unit 302 is activated to allow an operator to take a test. The communication unit 303 is a communication device for connecting the master device 30 to the network NT1 and to the communication channel NT2.

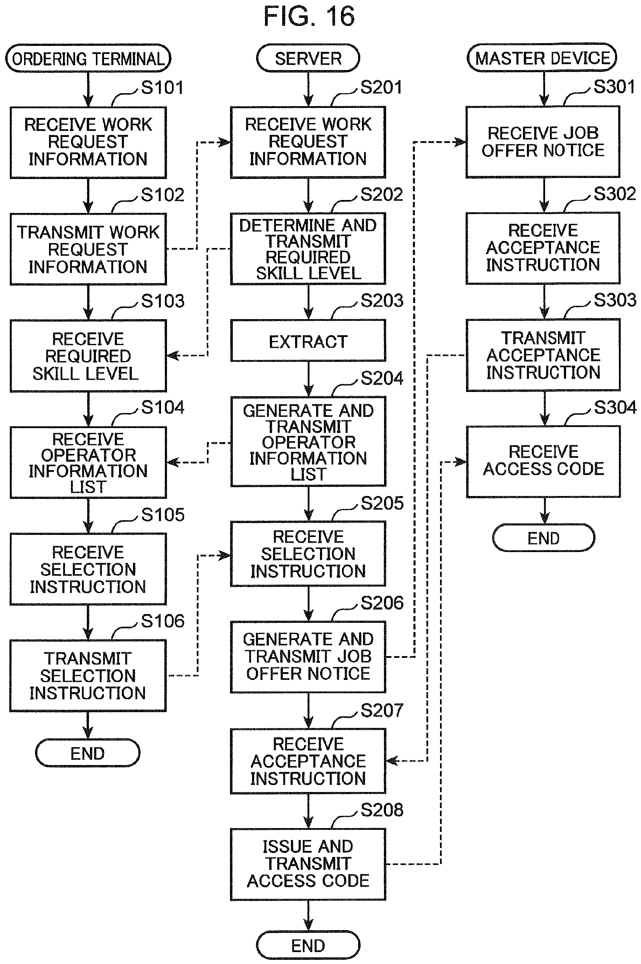

FIG. 16 is a flowchart showing processing performed in the work order placement and receiving system according to the embodiment of the present invention. At step 5101, the manipulation unit 203 of the ordering terminal 200 receives the work request information entered by the orderer of work. At step S102, the control unit 202 passes the work request information received by the manipulation unit 203 to the communication unit 303, and the communication unit 303 transmits the work request information to the server 10. Here, various information entered using the work entry screen G1 shown in FIG. 2 and the work details input screen G2 shown in FIG. 2 or the work details input screen G3 shown in FIG. 4 are transmitted as the work request information.

At S201, the communication unit 11 of the server 10 receives the work request information. At step S202, the required skill level determination unit 12 of the server 10 computes the required skill level based on the work request information received by the communication unit 11. For example, if the received work request information includes the working time for each work content as show in FIG. 3, the required skill level determination unit 12 yields "410" as the sum of all the evaluation points for each work content, and determines that the required skill level is Grade F by referring to the grade determination table T3.

At step S202, the communication unit 11 transmits the required skill level computed at step S202 to the ordering terminal 200. At step S103, the communication unit 204 of the ordering terminal 200 receives the required skill level. Upon the receipt, the ordering terminal 200 displays the work entry final screen G4 shown in FIG. 6 to notify the orderer of the required skill level.

At step S203, the information list generation unit 13 extracts, from among the operators enrolled in the operator database 18, operators having skill levels equal to or higher than the required skill level. For example, in the case where the received request information includes the combination of "machine model range: 3 t to 5 t", "ATT type: standard", and "head ATT type: bucket" that requires the skill level of Grade "A", the information list generation unit 13 extracts from the operator database 18 operators having skill levels of Grade "A" or higher for the combination of "machine model range: 3 t to 5 t", "ATT type: standard", and "head ATT type: bucket".

At step S204, in the server 10, the information list generation unit 13 generates an operator information list for presenting to the orderer the operators extracted at step S203, and passes it to the communication unit 11. The communication unit 11 transmits the operator information list to the ordering terminal 200.

At step S104, in the ordering terminal 200, the communication unit 204 receives the operator information list and the control unit 202 generates the operator list screen G150 (FIG. 8) and displays the list on the display unit 201.

At step S105, in the ordering terminal 200, the manipulation unit 203 receives, from the orderer having looked through the operator list screen G150, an instruction for selecting a recipient operator of a job offer.

At step S106, in the ordering terminal 200, the control unit 202 passes the selection instruction received by the manipulation unit 203 to the communication unit 204, and the communication unit 204 transmits the selection instruction to the server 10.

At step S205, the communication unit 11 of the server 10 receives the selection instruction. At step S206, in the server 10, the job offer generation unit 14 generates a job offer notice based on the selection instruction received by the communication unit 11 and passes it to the communication unit 11, and the communication unit 11 transmits the job offer notice to the master device 30.

At step S301, the communication unit 303 of the master device 30 receives the job offer notice. At step S302, the master device 30 generates the offer list screen G160 based on the job offer notice received by the communication unit 303, and receives, from the operator having looked through the offer list screen G160, an acceptance instruction indicating acceptance of a job offer. At step S303, the communication unit 303 of the master device 30 transmits the acceptance instruction to the server 10.

At step S207, the communication unit 11 of the server 10 receives the acceptance instruction. At step S208, in the server 10, the work permission unit 15 issues an access code for permitting the operator to perform the work corresponding to the job offer that the operator has accepted, and passes it to the communication unit 11. The communication unit 11 transmits the access code to the master device 30. At step S304, the communication unit 303 of the master device 30 receives the access code.

In this manner, the present embodiment makes it possible to extract, from the operator database, operators having skill levels equal to or higher than the required skill level for the work ordered by the orderer, generate an operator information list based on the extraction result, and present the list to the orderer using the ordering terminal 200. This enables the orderer to look through the operators included in the operator information list and thereby easily select an operator having a skill level appropriate for the ordered work.

The present embodiment may be modified in the following manner.
(1) Although the grade determination table shown in FIG. 5 specifies the five grade levels, the table may alternatively specify four grade levels or less or five grade levels or more.
(2) The present embodiment adopts the configuration in which, upon selection of an operator by the orderer of work clicking on the operator list screen G150 shown in FIG. 8, a job offer is transmitted to the master device 30 of the relevant operator, and upon input of an acceptance instruction on the offer list screen G160, a contract is established between the orderer and the operator, i.e. the configuration that allows the orderer and the operator to make an online contract. The present invention is not limited to this configuration, and the contract between the orderer and the operator may be made not online but in writing.
(3) In the above-described embodiment, the operators having skill levels equal to or higher than the required skill level for the combination of "machine model range", "ATT type", and "head ATT type" included in the work request information are extracted from the operator database
   18. The present invention is not limited to this configuration, and may alternatively be configured to extract operators having required skill levels equal to or greater than the required level from the operator database 18, irrespective of the combination of the "machine model range", "ATT type", and "head ATT type". In this case, the operator database 18 is not required to store the skill levels of operators for each of various combinations of "machine model range", "ATT type", and "head ATT type".

### Summary of Embodiment

The technical features of the present embodiment can be summarized as follows.

A work order placement and receiving system according to an aspect of the present invention comprises: an ordering terminal adapted to be used by an orderer of work to place an order for the work with an operator of a remote controller configured to remotely control a construction machine; and a server communicably connected to the ordering terminal, wherein the server includes a communication unit configured to receive, from the ordering terminal, work request information entered by the orderer and indicating a specific work content and working time required for the specific work content, a required skill level determination unit configured to determine, based on the work request information received by the communication unit, a required skill level indicating a skill for the remote control required for the operator by the orderer, an operator database storing respective skill levels of a plurality of operators, and an information list generation unit configured to extract from the operator database an operator having a skill level equal to or higher than the required skill level and generate an operator information list for presenting the extracted operator to the orderer, wherein the communication unit transmits the operator information list to the ordering terminal.

This configuration makes it possible to extract, from the operator database, operators having skill levels equal to or higher than the required skill level for the work ordered by the orderer, generate an operator information list based on the extraction result, and present the list to the orderer using the ordering terminal. This enables the orderer to look through the operators included in the operator information list and thereby easily select an operator having a skill level appropriate for the ordered work.

In the above-described configuration, it is preferable that the work order placement and receiving system further comprises the remote controller communicably connected to the server, wherein the ordering terminal receives, from the orderer, an instruction for selecting a recipient operator of a job offer from among operators included in the operator information list, and transmits the selection instruction to the server, the server further includes a job offer generation unit configured to generate, based on the selection instruction, a job offer notice for notifying the operator of the job offer made by the orderer together with the specific work content, and the communication unit transmits the job offer notice to the remote controller.

According to this configuration, a job offer notice is transmitted to the remote controller of the operator selected by the orderer. The job offer notice, which also indicates a specific work content, enables the notified operator to easily decide whether or not to accept the job offer.

In the above-described configuration, it is preferable that the remote controller receives an instruction for accepting the job offer from the operator and transmits the acceptance instruction to the server, and the server further includes a work permission unit configured, upon receipt of the acceptance instruction by the communication unit, to issue an access code for permitting the operator to perform work corresponding to the job offer, and transmit the access code to the remote controller via the communication unit.

According to this configuration, an access code is issued to the operator having accepted the job offer. This makes it possible to prevent a third party from taking part in the work ordered by the orderer.

In the above-described configuration, it is preferable that the server further includes a work performance database, created for each of the plurality of operators, storing the specific work content actually performed by the operator by remotely controlling the construction machine, in association with working time taken for the work content, a simulator performance database, created for each of the plurality of operators, storing a work content performed by the operator in a remote-control simulator included in the remote controller, in association with working time taken for the work content, and a skill level computation unit configured to, for each of the plurality of operators, compute the sum of the working time by referring to the work performance database and the simulator performance database and then compute the skill level, the skill level increasing as the computed sum increases, and store the computed skill level in the operator database.

This configuration makes it possible to provide a system that enables an operator to improve his/her skill level as the working time using the remote-control simulator, as well as the working time in the actual work ordered, increases, and thereby enables the operator to receive more job offers. This therefore makes it possible to motivate an operator to improve the skill level by using the remote-control simulator, for example, in spare time between work, and thereby the general skill level of operators.

In the above-described configuration, it is preferable that the server further includes a test performance database, created for each of the plurality of operators, storing a pass or fail result of a specific test that guarantees that the skill level reaches a certain level, and for each of the plurality of operators, the skill level computation unit makes the skill level higher, if the operator has passed the test, than in a case where the operator has failed to pass the test, and stores the increased skill level in the operator database.

According to this configuration, the skill level of an operator increases as he/she passes more test. This makes it possible to guarantee the quality of skill level.

In the above-described configuration, it is preferable that the work request information further includes a plurality of parameters of specifications of the construction machine to be used in the work, the operator database stores, for each of the plurality of operators, the skill level for each of various combinations of the plurality of parameters, and the information list generation unit extracts from the operator database an operator having a skill level equal to or greater than the required skill level for a combination of the plurality of parameters included in the work request information.

This configuration makes it possible to present to the orderer an operator appropriate for the combination of the plurality of specifications of the construction machine required by the orderer.

## Claims

1. A work order placement and receiving system, comprising:
an ordering terminal adapted to be used by an orderer of work to place an order for the work with an operator of a remote controller configured to remotely control a construction machine; and
a server communicably connected to the ordering terminal, wherein
the server includes
a communication unit configured to receive, from the ordering terminal, work request information entered by the orderer and indicating a specific work content and working time required for the specific work content,
a required skill level determination unit configured to determine, based on the work request information received by the communication unit, a required skill level indicating a skill for the remote control required for the operator by the orderer,
an operator database storing respective skill levels of a plurality of operators, and
an information list generation unit configured to extract from the operator database an operator having a skill level equal to or higher than the required skill level and generate an operator information list for presenting the extracted operator to the orderer, wherein
the communication unit transmits the operator information list to the ordering terminal,
the work order placement and receiving system further comprises
the remote controller communicably connected to the server, and
a slave device communicably interconnected to the remote controller, wherein
the slave device is a sub-controller disposed at an operator's seat of the construction machine and configured to directly control a control lever disposed at the operator's seat of the construction machine based on an amount of manipulation that the remote controller has received,
the ordering terminal receives, from the orderer, an instruction for selecting a recipient operator of a job offer from among operators included in the operator information list, and transmits the selection instruction to the server,
the server further includes a job offer generation unit configured to generate, based on the selection instruction, a job offer notice for notifying the operator of the job offer made by the orderer together with the specific work content,
the communication unit transmits the job offer notice to the remote controller,
the remote controller receives an instruction for accepting the job offer from the operator and transmits the acceptance instruction to the server,
the server further includes a work permission unit configured, upon receipt of the acceptance instruction by the communication unit, to issue an access code for permitting the operator to perform work corresponding to the job offer, and to transmit the access code to the remote controller and the slave device via the communication unit,
the remote controller and the slave device, upon receipt of the access code, store the access code in a respective memory,
the remote controller compares an access code entered by the operator with the access code stored in the memory and transmits, if the entered access code and the stored access code agree, the entered access code to the slave device, and
the slave device receives and compares the entered access code with the access code stored in the memory, and transmits, if the received access code and the stored access code agree, an access permission notice to the remote controller.

2. The work order placement and receiving system according to claim 1, wherein the server further includes
a work performance database, created for each of the plurality of operators, storing the specific work content actually performed by the operator by remotely controlling the construction machine, in association with working time taken for the work content,
a simulator performance database, created for each of the plurality of operators, storing a work content performed by the operator in a remote-control simulator included in the remote controller, in association with working time taken for the work content, and
a skill level computation unit configured to, for each of the plurality of operators, compute the sum of the working time by referring to the work performance database and the simulator performance database and then compute the skill level, the skill level increasing as the computed sum increases, and store the computed skill level in the operator database.

3. The work order placement and receiving system according to claim 2, wherein
the server further includes a test performance database, created for each of the plurality of operators, storing a pass or fail result of a specific test that guarantees that the skill level reaches a certain level, and
for each of the plurality of operators, the skill level computation unit makes the skill level higher, if the operator has passed the test, than in a case where the operator has failed to pass the test, and stores the increased skill level in the operator database.

4. The work order placement and receiving system according to any one of claims 1 to 3, wherein
the work request information further includes a plurality of parameters of specifications of the construction machine to be used in the work,
the operator database stores, for each of the plurality of operators, the skill level for each of various combinations of the plurality of parameters, and
the information list generation unit extracts from the operator database an operator having a skill level equal to or greater than the required skill level for a combination of the plurality of parameters included in the work request information.

5. A work order placement and receiving method for use in a work order placement and receiving system that includes: an ordering terminal adapted to be used by an orderer of work to place an order for the work with an operator of a remote controller configured to remotely control a construction machine; and a server communicably connected to the ordering terminal, the method comprising the steps of:
receiving, from the ordering terminal, work request information entered by the orderer and indicating a specific work content and working time required for the specific work content;
determining, based on the received work request information, a required skill level indicating a skill for the remote control required for the operator by the orderer;
extracting, from an operator database storing respective skill levels of a plurality of operators, an operator having a skill level equal to or higher than the required skill level and generating an operator information list for presenting the extracted operator to the orderer; and
transmitting the operator information list to the ordering terminal, wherein
the work order placement and receiving system further includes the remote controller communicably connected to the server, and
a stave device communicably interconnected to the remote controller,
the slave device is a sub-controller disposed at an operator's seat of the construction machine and configured to directly control a control lever disposed at the operator's seat of the construction machine based on an amount of manipulation that the remote controller has received,
the ordering terminal receives, from the orderer, an instruction for selecting a recipient operator of a job offer from among operators included in the operator information list, and transmits the selection instruction to the server,
the server generates, based on the selection instruction, a job offer notice for notifying the operator of the job offer made by the orderer together with the specific work content and transmits the job offer notice to the remote controller,
the remote controller receives an instruction for accepting the job offer from the operator and transmits the acceptance instruction to the server,
the server issues, upon receipt of the acceptance instruction, an access code for permitting the operator to perform work corresponding to the job offer, and transmits the access code to the remote controller and the slave device,
the remote controller and the slave device, upon receipt of the access code, store the access code in a respective memory,
the remote controller compares an access code entered by the operator with the access code stored in the memory and transmits, if the entered access code and the stored access code agree, the entered access code to the slave device, and
the slave device receives and compares the entered access code with the access code stored in the memory, and transmits, if the received access code and the stored access code agree, an access permission notice to the remote controller.

## Patentansprüche

1. System zur Arbeitsauftragsvermittlung und zum Arbeitsauftragsempfang, mit:
einem Auftragsvermittlungsterminal, das dazu angepasst ist, um von einem Auftraggeber von Arbeiten verwendet zu werden, um einen Auftrag für die Arbeit mit einem Bediener einer Remote-Steuerungseinrichtung zu vermitteln, die dazu eingerichtet ist, um eine Baumaschine remote zu steuern; und
einem Server, der kommunizierbar mit dem Auftragsvermittlungsterminal verbunden ist, wobei der Server umfasst
eine Kommunikationseinheit, die dazu eingerichtet ist, um von dem Auftragsvermittlungsterminal Arbeitsanforderungsinformationen zu empfangen, die von dem Auftraggeber eingegeben werden und einen spezifischen Arbeitsinhalt und eine für den spezifischen Arbeitsinhalt erforderliche Arbeitszeit angeben,
eine Einheit zur Bestimmung des erforderlichen Fähigkeitsniveaus, die dazu eingerichtet ist, um auf der Grundlage der von der Kommunikationseinheit empfangenen Arbeitsanforderungsinformationen ein erforderliches Fähigkeitsniveau zu bestimmen, das ein von dem Auftraggeber für den Bediener erforderliches Fähigkeitsniveau für die Remote-Steuerungseinrichtung angibt,
eine Bedienerdatenbank, die jeweilige Fähigkeitsniveaus einer Vielzahl von Bedienern speichert, und
eine Informationslisteerzeugungseinheit, die dazu eingerichtet ist, um aus der Bedienerdatenbank einen Bediener zu extrahieren, der ein Fähigkeitsniveau aufweist, das gleich wie oder höher als das erforderliche Fähigkeitsniveau ist, und um eine Bedienerinformationsliste zu erzeugen, zum Präsentieren des extrahierten Bedieners an den Auftraggeber, wobei
die Kommunikationseinheit die Bedienerinformationsliste an das Auftragsvermittlungsterminal überträgt,
das System zur Arbeitsauftragsvermittlung und zum Arbeitsauftragsempfang ferner umfasst
die Remote-Steuerungseinrichtung, die kommunizierbar mit dem Server verbunden ist, und
eine Slave-Vorrichtung, die kommunizierbar mit der Remote-Steuerungseinrichtung verbunden ist, wobei
die Slave-Vorrichtung eine Untersteuerungseinrichtung ist, die an einem Bedienersitz der Baumaschine angeordnet ist und dazu eingerichtet ist, um einen an dem Bedienersitz der Baumaschine angeordneten Steuerungshebel direkt zu steuern, auf der Grundlage eines Ausmaßes einer Manipulation, die die Remote-Steuerungseinrichtung empfangen hat,
das Auftragsvermittlungsterminal von dem Auftraggeber eine Anweisung zum Auswählen eines Empfängerbedieners eines Jobangebots aus den in der Bedienerinformationsliste enthaltenen Bedienern empfängt und die Auswahlanweisung an den Server überträgt,
der Server ferner eine Jobangebotserzeugungseinheit enthält, die dazu eingerichtet ist, um auf der Grundlage der Auswahlanweisung eine Jobangebotsmitteilung zu erzeugen, um den Bediener über das von dem Auftraggeber gemachte Jobangebot zusammen mit dem spezifischen Arbeitsinhalt zu benachrichtigen,
die Kommunikationseinheit die Jobangebotsmitteilung an die Remote-Steuerungseinrichtung überträgt,
die Remote-Steuerungseinrichtung eine Anweisung zur Annahme des Jobangebots von dem Bediener empfängt und die Annahmeanweisung an den Server überträgt,
der Server ferner eine Arbeitsgenehmigungseinheit enthält, die dazu eingerichtet ist, um bei Empfang der Annahmeanweisung durch die Kommunikationseinheit einen Zugriffscode auszugeben, um dem Bediener zu erlauben, eine dem Jobangebot entsprechende Arbeit auszuführen, und den Zugriffscode über die Kommunikationseinheit an die Remote-Steuerungseinrichtung und die Slave-Vorrichtung zu übertragen,
die Remote-Steuerungseinrichtung und die Slave-Vorrichtung, bei Empfang des Zugriffscodes, den Zugriffscode in einem jeweiligen Speicher speichern,
die Remote-Steuerungseinrichtung einen von dem Bediener eingegebenen Zugriffscode mit dem in dem Speicher gespeicherten Zugriffscode vergleicht und, wenn der eingegebene Zugriffscode und der gespeicherte Zugriffscode übereinstimmen, den eingegebenen Zugriffscode an die Slave-Vorrichtung überträgt, und
die Slave-Vorrichtung den eingegebenen Zugriffscode empfängt und mit dem in dem Speicher gespeicherten Zugriffscode vergleicht und, wenn der empfangene Zugriffscode und der gespeicherte Zugriffscode übereinstimmen, eine Zugriffsberechtigungsmeldung an die Remote-Steuerungseinrichtung überträgt.

2. System zur Arbeitsauftragsvermittlung und zum Arbeitsauftragsempfang nach Anspruch 1, wobei der Server ferner umfasst
eine Arbeitsleistungsdatenbank, die für jeden der Vielzahl von Bedienern erstellt ist und die den spezifischen Arbeitsinhalt, der von dem Bediener durch die Remote-Steuerungseinrichtung der Baumaschine tatsächlich ausgeführt wird, in Verbindung mit der für den Arbeitsinhalt benötigten Arbeitszeit speichert,
eine Simulator-Leistungsdatenbank, die für jeden der Vielzahl von Bedienern erstellt ist und die einen Arbeitsinhalt speichert, der von dem Bediener in einem in der Remote-Steuerungseinrichtung enthaltenen Remote-Steuerungseinrichtungssimulator durchgeführt wird, in Verbindung mit einer für den Arbeitsinhalt benötigten Arbeitszeit, und
eine Fähigkeitsniveauberechnungseinheit, die dazu eingerichtet ist, um für jeden der Vielzahl von Bedienern die Summe der Arbeitszeit durch Bezugnahme auf die Arbeitsleistungsdatenbank und die Simulator-Leistungsdatenbank zu berechnen und dann das Fähigkeitsniveau zu berechnen, wobei das Fähigkeitsniveau mit zunehmender berechneter Summe zunimmt, und das berechnete Fähigkeitsniveau in der Bedienerdatenbank zu speichern.

3. System zur Arbeitsauftragsvermittlung und zum Arbeitsauftragsempfang nach Anspruch 2, wobei
der Server ferner eine Testleistungsdatenbank enthält, die für jeden der Vielzahl von Bedienern erstellt ist, die ein Ergebnis eines bestandenen oder nicht bestandenen spezifischen Tests speichert, der garantiert, dass das Fähigkeitsniveau ein bestimmtes Niveau erreicht, und
für jeden der Vielzahl von Bedienern die Fähigkeitsniveauberechnungseinheit das Fähigkeitsniveau höher macht, wenn der Bediener den Test bestanden hat, als in einem Fall, in dem der Bediener den Test nicht bestanden hat, und das erhöhte Fähigkeitsniveau in der Bedienerdatenbank speichert.

4. System zur Arbeitsauftragsvermittlung und zum Arbeitsauftragsempfang nach einem der Ansprüche 1 bis 3, wobei
die Arbeitsanforderungsinformationen ferner eine Vielzahl von Parametern von Spezifikationen der bei der Arbeit zu verwendenden Baumaschine enthalten,
die Bedienerdatenbank für jeden der Vielzahl von Bedienern das Fähigkeitsniveau für jede der verschiedenen Kombinationen der Vielzahl von Parametern speichert, und
die Informationslistenerzeugungseinheit aus der Bedienerdatenbank einen Bediener extrahiert, der ein Fähigkeitsniveau aufweist, das gleich wie oder größer als das erforderliche Fähigkeitsniveau für eine Kombination der Vielzahl von Parametern ist, die in den Arbeitsanforderungsinformationen enthalten sind.

5. Verfahren zur Arbeitsauftragsvermittlung und zum Arbeitsauftragsempfang für eine Verwendung in einem System zur Arbeitsauftragsvermittlung und zum Arbeitsauftragsempfang, mit: einem Auftragsvermittlungsterminal, das dazu angepasst ist, um von einem Auftraggeber von Arbeiten verwendet zu werden, um einen Auftrag für die Arbeit mit einem Bediener einer Remote-Steuerungseinrichtung zu vermitteln, die dazu eingerichtet ist, um eine Baumaschine remote zu steuern; und einem Server, der kommunizierbar mit dem Auftragsvermittlungsterminal verbunden ist, wobei das Verfahren die folgenden Schritte umfasst
Empfangen, von dem Auftragsvermittlungsterminal, Arbeitsanforderungsinformationen, die von dem Auftraggeber eingegeben werden und einen spezifischen Arbeitsinhalt und eine für den spezifischen Arbeitsinhalt erforderliche Arbeitszeit angeben;
Bestimmen eines erforderlichen Fähigkeitsniveaus auf der Grundlage der von empfangenen Arbeitsanforderungsinformationen, das ein von dem Auftraggeber für den Bediener erforderliches Fähigkeitsniveau für die Remote-Steuerungseinrichtung angibt,
Extrahieren, aus einer Bedienerdatenbank, die jeweilige Fähigkeitsniveaus einer Vielzahl von Bedienern speichert, eines Bedieners, der ein Fähigkeitsniveau aufweist, das gleich wie oder höher als das erforderliche Fähigkeitsniveau ist, und Erzeugen einer Bedienerinformationsliste, zum Präsentieren des extrahierten Bedieners an den Auftraggeber; und
Übertragen der Bedienerinformationsliste an das Auftragsvermittlungsterminal, wobei
das System zur Arbeitsauftragsvermittlung und zum Arbeitsauftragsempfang ferner umfasst
die Remote-Steuerungseinrichtung, die kommunizierbar mit dem Server verbunden ist, und
eine Slave-Vorrichtung, die kommunizierbar mit der Remote-Steuerungseinrichtung verbunden ist, wobei
die Slave-Vorrichtung eine Untersteuerungseinrichtung ist, die an einem Bedienersitz der Baumaschine angeordnet ist und dazu eingerichtet ist, um einen an dem Bedienersitz der Baumaschine angeordneten Steuerungshebel direkt zu steuern, auf der Grundlage eines Ausmaßes einer Manipulation, die die Remote-Steuerungseinrichtung empfangen hat,
das Auftragsvermittlungsterminal von dem Auftraggeber eine Anweisung zum Auswählen eines Empfängerbedieners eines Jobangebots aus den in der Bedienerinformationsliste enthaltenen Bedienern empfängt und die Auswahlanweisung an den Server überträgt,
der Server auf der Grundlage der Auswahlanweisung eine Jobangebotsmitteilung erzeugt, zum Benachrichtigen des Bedieners über das von dem Auftraggeber gemachte Jobangebot zusammen mit dem spezifischen Arbeitsinhalt,
die Remote-Steuerungseinrichtung eine Anweisung zur Annahme des Jobangebots von dem Bediener empfängt und die Annahmeanweisung an den Server überträgt,
der Server bei Empfang der Annahmeanweisung einen Zugriffscode ausgibt, um dem Bediener zu erlauben, eine dem Jobangebot entsprechende Arbeit auszuführen, und den Zugriffscode an die Remote-Steuerungseinrichtung und die Slave-Vorrichtung überträgt,
die Remote-Steuerungseinrichtung und die Slave-Vorrichtung, bei Empfang des Zugriffscodes, den Zugriffscode in einem jeweiligen Speicher speichern,
die Remote-Steuerungseinrichtung einen von dem Bediener eingegebenen Zugriffscode mit dem in dem Speicher gespeicherten Zugriffscode vergleicht und, wenn der eingegebene Zugriffscode und der gespeicherte Zugriffscode übereinstimmen, den eingegebenen Zugriffscode an die Slave-Vorrichtung überträgt, und
die Slave-Vorrichtung den eingegebenen Zugriffscode empfängt und mit dem in dem Speicher gespeicherten Zugriffscode vergleicht und, wenn der empfangene Zugriffscode und der gespeicherte Zugriffscode übereinstimmen, eine Zugriffsberechtigungsmeldung an die Remote-Steuerungseinrichtung überträgt.

## Revendications

1. Système de passation et de réception d'ordres de travail, comprenant :
un terminal de passation d'ordre adapté pour être utilisé par un donneur d'ordre de travail afin de passer un ordre de travail auprès d'un opérateur d'un contrôleur à distance configuré pour commander à distance un engin de chantier ; et
un serveur connecté en communications au terminal de passation d'ordre, dans lequel le serveur comporte
une unité de communication configurée pour recevoir, à partir du terminal de passation d'ordre, des informations de demande de travail entrées par le donneur d'ordre et indiquant un contenu de travail spécifique et un temps de travail requis pour le contenu de travail spécifique,
une unité de détermination de niveau de compétence requis configurée pour déterminer, en fonction des informations de demande de travail reçues par l'unité de communication, un niveau de compétence requis indiquant une compétence requise par le donneur d'ordre pour la commande à distance réalisée par l'opérateur,
une base de données d'opérateurs stockant des niveaux de compétence respectifs d'une pluralité d'opérateurs, et
une unité de génération de liste d'informations configurée pour extraire à partir de la base de données d'opérateurs un opérateur ayant un niveau de compétence égal ou supérieur au niveau de compétence requis et générer une liste d'informations d'opérateurs pour présenter l'opérateur extrait au donneur d'ordre, dans lequel
l'unité de communication transmet la liste d'informations d'opérateurs au terminal de passation d'ordre,
le système de passation et réception d'ordres de travail comprend en outre
le contrôleur à distance connecté en communications avec le serveur, et
un dispositif esclave interconnecté en communications avec le contrôleur à distance, dans lequel
le dispositif esclave est un sous-contrôleur disposé au niveau d'un siège d'opérateur de l'engin de chantier et configuré pour commander directement un levier de commande disposé au niveau du siège d'opérateur de l'engin de chantier en fonction d'une quantité de manipulation reçue par le contrôleur à distance,
le terminal de passation d'ordre reçoit, à partir du donneur d'ordre, une instruction pour sélectionner un opérateur destinataire d'une offre de travail parmi les opérateurs figurant dans la liste d'informations d'opérateurs et transmet l'instruction de sélection au serveur,
le serveur comporte en outre une unité de génération d'offre de travail configurée pour générer, en fonction de l'instruction de sélection, un avis d'offre de travail pour notifier à l'opérateur l'offre de travail faite par le donneur d'ordre ainsi que le contenu de travail spécifique,
l'unité de communication transmet l'avis d'offre de travail au contrôleur à distance,
le contrôleur à distance reçoit une instruction d'acceptation de l'offre de travail à partir de l'opérateur et transmet l'instruction d'acceptation au serveur,
le serveur comporte en outre une unité d'autorisation de travail configurée, à la réception de l'instruction d'acceptation par l'unité de communication, pour délivrer un code d'accès permettant à l'opérateur de réaliser le travail correspondant à l'offre de travail, et transmettre le code d'accès au contrôleur à distance et au dispositif esclave par l'intermédiaire de l'unité de communication,
le contrôleur à distance et le dispositif esclave, à la réception du code d'accès, stockent le code d'accès dans une mémoire respective,
le contrôleur à distance compare un code d'accès entré par l'opérateur au code d'accès stocké dans la mémoire et, si le code d'accès entré et le code d'accès stocké concordent, transmet le code d'accès entré au dispositif esclave, et
le dispositif esclave reçoit le code d'accès entré et le compare au code d'accès stocké dans la mémoire et transmet, si le code d'accès reçu et le code d'accès stocké concordent, un avis d'autorisation d'accès au contrôleur à distance.

2. Système de passation et de réception d'ordre de travail selon la revendication 1, dans lequel le serveur comporte en outre
une base de données de performance de travail, créée pour chacun de la pluralité d'opérateurs, qui stocke le contenu de travail spécifique effectivement réalisé par l'opérateur commandant à distance l'engin de chantier, en association avec le temps de travail pris pour le contenu de travail,
une base de données de performance de simulateur, créée pour chacun de la pluralité d'opérateurs, qui stocke un contenu de travail réalisé par l'opérateur dans un simulateur de commande à distance inclus dans le contrôleur à distance, en association avec le temps de travail pris pour le contenu de travail, et
une unité de calcul de niveau de compétence configurée pour, pour chacun de la pluralité d'opérateurs, calculer la somme du temps de travail en se référant à la base de données de performance de travail et à la base de données de performance de simulateur, puis calculer le niveau de compétence, le niveau de compétence augmentant à mesure que la somme calculée augmente, et stocker le niveau de compétence calculé dans la base de données d'opérateurs.

3. Système de passation et de réception d'ordres de travail selon la revendication 2, dans lequel
le serveur comporte en outre une base de données de performance de test, créée pour chacun de la pluralité d'opérateurs, qui stocke un résultat de réussite ou d'échec d'un test spécifique qui garantit que le niveau de compétence atteint un certain niveau, et
pour chacun de la pluralité d'opérateurs, si l'opérateur a réussi le test, l'unité de calcul de niveau de compétence rehausse le niveau de compétence, contrairement au cas où l'opérateur n'a pas réussi le test, et stocke le niveau de compétence rehaussé dans la base de données d'opérateurs.

4. Système de passation et de réception d'ordres de travail selon l'une quelconque des revendications 1 à 3, dans lequel
les informations de demande de travail comportent en outre une pluralité de paramètres de spécifications de l'engin de chantier devant être utilisé dans le travail,
la base de données d'opérateurs stocke, pour chacun de la pluralité d'opérateurs, le niveau de compétence pour chacune de diverses combinaisons de la pluralité de paramètres, et
l'unité de génération de liste d'informations extrait à partir de la base de données d'opérateurs un opérateur ayant un niveau de compétence égal ou supérieur au niveau de compétence requis pour une combinaison de la pluralité de paramètres inclus dans les informations de demande de travail.

5. Procédé de passation et de réception d'ordres de travail destiné à être utilisé dans un système de passation et de réception d'ordres de travail qui comporte : un terminal de passation d'ordre adapté pour être utilisé par un donneur d'ordre de travail afin de passer un ordre pour le travail auprès d'un opérateur d'un contrôleur à distance configuré pour commander à distance un engin de chantier ; et un serveur connecté en communication avec le terminal de passation d'ordre, le procédé comprenant les étapes suivantes :
la réception, à partir du terminal de passation d'ordre, d'informations de demande de travail entrées par le donneur d'ordre et indiquant un contenu de travail spécifique et le temps de travail requis pour le contenu de travail spécifique ;
la détermination, en fonction des informations de demande de travail reçues, d'un niveau de compétence requis indiquant une compétence requise par le donneur d'ordre pour la commande à distance par l'opérateur ;
l'extraction, à partir d'une base de données d'opérateurs qui stocke des niveaux de compétence respectifs d'une pluralité d'opérateurs, d'un opérateur ayant un niveau de compétence égal ou supérieur au niveau de compétence requis et la génération d'une liste d'informations d'opérateurs pour présenter l'opérateur extrait au donneur d'ordre ; et
la transmission de la liste d'informations d'opérateurs au terminal de passation d'ordre, dans lequel
le système de passation et de réception d'ordres de travail comporte en outre le contrôleur à distance connecté en communication au serveur, et
un dispositif esclave interconnecté en communication avec le contrôleur à distance,
le dispositif esclave est un sous-contrôleur disposé au niveau d'un siège d'opérateur de l'engin de chantier et configuré pour commander directement un levier de commande disposé au niveau du siège d'opérateur de l'engin de chantier en fonction d'une quantité de manipulation reçue par le contrôleur à distance,
le terminal de passation d'ordre reçoit, de la part du donneur d'ordre, une instruction pour sélectionner un opérateur destinataire d'une offre de travail parmi des opérateurs figurant dans la liste d'informations d'opérateurs et transmet l'instruction de sélection au serveur,
le serveur génère, en fonction de l'instruction de sélection, un avis d'offre de travail pour notifier à l'opérateur l'offre de travail faite par le donneur d'ordre ainsi que le contenu de travail spécifique et transmet l'avis d'offre de travail au contrôleur à distance,
le contrôleur à distance reçoit une instruction d'acceptation de l'offre de travail à partir de l'opérateur et transmet l'instruction d'acceptation au serveur,
le serveur délivre, à la réception de l'instruction d'acceptation, un code d'accès permettant à l'opérateur de réaliser un travail correspondant à l'offre de travail, et transmet le code d'accès au contrôleur à distance et au dispositif esclave,
le contrôleur à distance et le dispositif esclave, à la réception du code d'accès, stockent le code d'accès dans une mémoire respective,
le contrôleur à distance compare un code d'accès entré par l'opérateur au code d'accès stocké dans la mémoire et, si le code d'accès entré et le code d'accès stocké concordent, transmet le code d'accès entré au dispositif esclave, et
le dispositif esclave reçoit le code d'accès entré et le compare au code d'accès stocké dans la mémoire et transmet, si le code d'accès reçu et le code d'accès stocké concordent, un avis d'autorisation d'accès au contrôleur à distance.
